# EUROPÄISCHE PATENTANMELDUNG

(11) **EP 2 148 281 A1**
(43) Veröffentlichungstag der Anmeldung: **27.01.2010**
(21) Anmeldenummer: 08013204.6
(22) Anmeldetag: 22.07.2008
(51) Int. Cl.: G06F 17/30

(54) **Speicherprogrammierbares Steuerungssystem und Verfahren zur automatisierten Erstellung von zusammengesetzten Webseiten**

(71) Anmelder: Siemens Aktiengesellschaft, 80333 München (DE)
(72) Erfinder: Herberth, Harald, 90522 Oberasbach (DE); Plaum, Reiner, 91052 Erlangen (DE); Talanis, Thomas, 91336 Heroldsbach (DE); Volkmann, Frank, 90475 Nürnberg (DE)

(57) **Zusammenfassung**

Das Speicherprogrammierbares Steuerungssystem zur automatisierten Erstellung von aus mindestens einem Einzelbestandteil und mindestens einem dynamischen Inhalt zusammengesetzten Webseiten, welche über einen Webbrowser anforderbar und darstellbar sind, umfasst einen Server zur Auswertung von eingehenden Anforderungen, einen Speicher zur Speicherung von Einzelbestandteilen und weiteren Werten, und ein Steuerungsprogramm (13) zur Erzeugung von weiteren dynamischen Inhalten.

## Beschreibung

### Fachgebiet der Erfindung

Die Erfindung betrifft eine Vorrichtung und ein Verfahren zur automatisierten Erstellung von aus mindestens einem Einzelbestandteil und mindestens einem dynamischen Inhalt zusammengesetzten Webseiten, welche über einen Webbrowser anforderbar und darstellbar sind.

Viele Informationen sind mittlerweile über Internet-Dienste verfügbar. Das Protokoll HTTP wird üblicherweise eingesetzt, die zugehörigen Dokumente sind im sog. HTML-Format zur Verfügung gestellt. Das Hypertext Transfer Protocol (HTTP) ist ein Protokoll zur Übertragung von Daten über ein Netzwerk. Es wird hauptsächlich eingesetzt, um Webseiten und andere Daten aus dem World Wide Web (WWW) in einen Webbrowser zu laden. Die Hypertext Markup Language (HTML), oft auch kurz als Hypertext bezeichnet, ist eine textbasierte Auszeichnungssprache zur Strukturierung von Inhalten wie Texten, Bildern und Hyperlinks in Dokumenten. HTML-Dokumente sind die Grundlage des World Wide Web und werden von einem Webbrowser dargestellt. Neben den vom Browser angezeigten Inhalten einer Webseite enthält HTML zusätzliche Angaben in Form von Metainformationen, die z. B. über die im Text verwendete Sprache oder den Autor Auskunft geben oder den Inhalt des Textes zusammenfassen.

Damit kann der Benutzer, der eine geeignete Applikation auf seiner Hardware verwendet, auf viele verschiedene Informationsquelle zugreifen. Webbrowser (oder allgemein auch Browser genannt) sind spezielle Computerprogramme zum Betrachten von Webseiten im World Wide Web. Das Durchstöbern des World Wide Webs respektive das aufeinanderfolgende Abrufen beliebiger Hyperlinks als Verbindung zwischen Webseiten mit Hilfe solch eines Programms wird auch als Internetsurfen bezeichnet. Neben HTML-Seiten können sie verschiedene andere Arten von Dokumenten anzeigen. Webbrowser stellen die Benutzeroberfläche für Webanwendungen dar. Dies sind weitestgehend unabhängig von der verwendeten Hardware sowohl auf Client- als auf Server-Seite möglich.

Der Aufwand der Informationsaufbereitung und Bereitstellung wird an den Web-Server übergeben, also den Träger/Erzeuger der Information. Auf diese Art sind vielerorts Web-Server entstanden, die entweder die Information als fertige Dokumente vorliegen haben und diese mittels http zur Verfügung stellen (statisch) oder mittels eigenständiger Programme die Dokumente beim Zugriff durch den Browser dynamisch erstellen und aktualisiert zurück liefern. Viele Anwendungen sind hier bereits bekannt und beliebt, wie Wetterdaten, Börsenkurse, Diskussions-Foren etc.. Eine Webanwendung oder Webapplikation ist ein Computer-Programm, das auf einem Webserver ausgeführt wird, wobei eine Interaktion mit dem Benutzer ausschließlich über einen Webbrowser erfolgt. Hierzu sind der Computer des Benutzers (Client) und der Server über ein Netzwerk, wie das Internet oder über ein Intranet miteinander verbunden, so dass die räumliche Entfernung zwischen Client und Server unerheblich ist.

Während als statische Webanwendungen nur aus der Bereitstellung aller zu liefernden Dokumente (Web-Seiten) bestehen, müssen dynamische und interaktive Webanwendungen erstellt werden. Üblicherweise werden diese Anwendungen innerhalb der Infrastruktur eines Webservers geschrieben und eingebunden (CGI, ISAPI, Apache Module...) wobei derzeit viele verschiedene Lösungen existieren: Microsoft ASP.Net, Java Servlet, Java Server Pages JSP, serverseitige Skriptsprachen wie Perl, PHP, Python, Ruby etc.

### Stand der Technik

Webanwendungen existieren derzeit auf allen gängigen Rechnern und somit auch auf eingebetteten Systemen (engl. embedded system), welches einen elektronischen Rechner oder auch Computer bezeichnet, der in einen technischen Kontext eingebunden (eingebettet) ist. Dabei hat der Rechner die Aufgabe, das System, in das er eingebettet ist, zu steuern, zu regeln oder zu überwachen. Eingebettete Systeme verrichten - weitestgehend unsichtbar für den Benutzer - den Dienst in einer Vielzahl von Anwendungsbereichen und Geräten. Im Fall von komplexen Gesamtsystemen handelt es sich dabei meist um eine Vernetzung einer Vielzahl von ansonsten autonomen, eingebetteten Systemen (z. B. im Fahrzeug oder Flugzeug). Oft werden eingebettete Systeme speziell an eine Aufgabe angepasst. Die Software dient sowohl zur Steuerung des Systems selbst, als auch ggf. zur Interaktion des Systems mit der Außenwelt über definierte Schnittstellen oder Protokolle (z. B. LIN-Bus, CAN-Bus oder TCP/IP über Ethernet).
Existierende Webanwendungen für SPS sind heutzutage bevorzugt in der Programmiersprache C erstellt.

Eine Webanwendung kann heute als Steuerprogramm erstellt werden, wenn die sogenannte SEND/RECEIVE Schnittstelle verwendet wird. Über diese Schnittstelle können Daten direkt über die TCP/IP Schnittstelle empfangen und gesendet werden. HTTP setzt auf dem TCP/IP Protokoll direkt auf. Aus der US 6,915,330 ist bereits eine Webanwendung bekannt, die innerhalb des Steuerungsprogramms HTTP Pakete direkt auswertet und generiert. Diese Vorgehensweise hat jedoch den Nachteil, dass ein solches Programm sehr schwer zu warten und außerdem sehr langsam ist, da HTTP viel mit dem Datentyp ,,string" arbeitet und die Speicherprogrammierbaren Steuerungen diesen Datentyp für die Verarbeitung dieses Datentyps wenig geeignet sind.

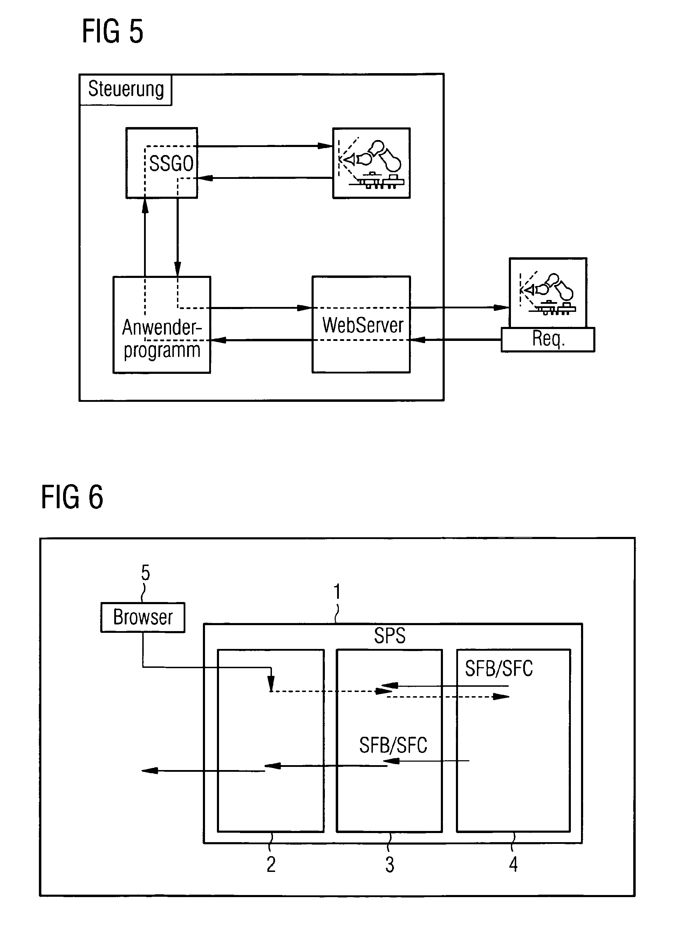

Als weitere Lösung dieses Problems ist es aus der EP 1865421 bereits bekannt, dass der Web-Server (also die Software, die über das HTTP Protokoll kommuniziert), als Teil einer SPS Firmware zur Verfügung gestellt wird, siehe auch Figur 6. Analog zur CGI Schnittstelle kann der Web-Server mit dem Anwendungsprogramm kommunizieren. Eine Anforderung des Web-Browsers wird damit an das Steuerungsprogramm der SPS übergeben, welches die Adresse (genauer den Unified Resource Locator URL) untersucht und in Abhängigkeit von der Adresse und weiterer Parameter die Antwort, also das HTML-Dokument erzeugt.
(z. B. im Rechner gespeicherter Nutzer-Informationen, sogenannter Cookies: ein kurzer Eintrag in einer Datenbank bzw. in einem speziellen Dateiverzeichnis auf einem Computer das dem Austausch von Informationen zwischen Computerprogrammen oder der zeitlich beschränkten Archivierung von Informationen dient.)

Dieses HTML-Dokument wird an den Web-Server geliefert, der wiederum die Seite an den Web-Browser sendet. Das Steuerungsprogramm muss bei dieser Lösung die Komplexität von HTTP nicht bearbeiten, allerdings muss es sich um die Erzeugung von HTML kümmern, das ein sehr zeichenketten-intensiver Code ist, wie oben bereits beschrieben. Auch bei dieser Lösung entsteht ein Programm, das schwer zu warten und nicht besonders performant ist.

Aufgabe der Erfindung ist, ein Speicherprogrammierbares Steuerungssystem und ein Verfahren zur Ausführung auf demselben anzugeben, welches die oben genannten Nachteile nicht hat.

### Darstellung der Erfindung

Diese Aufgabe wird gelöst durch ein Speicherprogrammierbares Steuerungssystem gemäß den Merkmalen des Patentanspruchs 1 und ein Verfahren gemäß den Merkmalen des Patentanspruchs 10.

Das Speicherprogrammierbares Steuerungssystem zur automatisierten Erstellung von aus mindestens einem Einzelbestandteil und mindestens einem dynamischen Inhalt zusammengesetzten Webseiten, welche über einen Webbrowser anforderbar und darstellbar sind, umfasst einen Server zur Auswertung von eingehenden Anforderungen, einen Speicher zur Speicherung von Einzelbestandteilen (d. h. Aufteilung der Seite in Anteile, die vom Webserver direkt verarbeitet werden können (Fragment, Template, ...), insbesondere ein SPS-Anwenderspeicher, und in die Daten eingefügt werden können, die aus dem SPS-Speicher kommen. Diese Daten können durch das SPS Programm erstellt werden, bevor sie in die Seite eingefügt werden.) und weiteren Werten, und ein Steuerungsprogramm (13), insbesondere ein Steuerprogramm welches vom Anwender als SPS-Programm in einer auf der SPS gängigen, in das Ablaufsystem der SPS integriertes Teil, erstellt und geladen werden kann, zur Erzeugung von weiteren dynamischen Inhalten.

Die Einzelbestandteile sind im Speicher vorhanden, das Schreiben der Werte nachher erfolgt in den Anwenderspeicher, und ist damit dem SPS-Programm mit Standardmitteln zugänglich.

Das Verfahren zum automatisierten Erstellen von aus mindestens einem Einzelbestandteil und mindestens einem dynamischen Inhalt zusammengesetzten Webseiten, welche über einen Web-browser anforderbar und darstellbar sind, hat folgende Schritte:
Empfang und Auswertung einer eingehenden Anforderung (Request) durch den Webserver,
Hinterlegen (Werte schreiben) von Informationen im Speicher, Freigeben des Steuerungsprogramms zur Erzeugung des mindestens einen dynamischen Inhalts
Abrufen (Werte lesen) von dem mindestens einen Einzelbestandteil aus dem Anwender-Speicher und
Fertigstellen und Ausliefern der Webseite (Response).

Durch die vorliegende Erfindung können Web-Anwendungen einerseits als Daten eines Steuerungsprogramms beschrieben werden, und (wo notwendig) durch das normale Steuerungsprogramm der Speicherprogrammierbaren Steuerung SPS erstellt werden. Das bedeutet, der SPS-Nutzer kann eine beliebige Web-Anwendung unter ausschließlicher Verwendung des Steuerungsprogramms schreiben. Hierbei werden nur die absolut notwendigen Schritte ("Business-Logic") im Steuerungsprogramm ausgeführt und der Rest, die "nicht-SPS"-Funktionen in den Web-Server, der für diese Art von Anwendungen besser geeignet ist, verlagert. Dazu kommen dann noch die dynamischen Daten, die vom SPS-Programm durch Code bei der Anforderung erst berechnet werden können.

Durch das erfindungsgemäße Verfahren wird eine Trennung der Rollen bei der Erstellung einer Web-Applikation ermöglicht. Dabei wird zunächst, beispielsweise von einem Web-Designer, eine Struktur der Anwendung (welche Seiten, Informationen, Grafiken) festgelegt. Die Seiten bestehen aus einem statischen und einem dynamischen Informations-Anteil.

Die statischen Anteile, inklusive das Format der dynamischen Anteile der Seiten können gestaltet werden, ebenso kann bereits der Platz der dynamischen Anteile auf der Seite festgelegt werden.

Die Umsetzung durch einen Programmierer bindet den dynamischen Anteil der Seite an konkrete Daten in der Steuerung an. Es wird ein Code erstellt, der während der Seitenerstellung in der SPS aufgerufen wird, da er für einige Seiten benötigt wird.

Die Webanwendung wird aufgeteilt in eine Beschreibung (als Daten in der Steuerung abgelegt) und einen Code, wobei die Beschreibung durch den Webserver abgearbeitet wird.

In der Beschreibung wird unter anderem festgelegt, welche Anfragen des Browsers bearbeitet werden können (genannte Seiten, Adressen URLs).

Die Web-Seiten sind dabei aus mehreren Bestandteilen (Teilbereiche einer HTML-Seite, in dem eine andere HTML-Seite dargestellt werden kann..) oder Fragmente genannt. Dies ermöglicht eine vorteilhafte Mehrfachverwendung gleicher Seitenteile beispielsweise bei verschiedenen Seiten der Anwendung. Für die einzelnen Bestandteile wird beschrieben, wo sich der Inhalt, also die Daten, die an den Browser als Teil der Webseite zu senden sind, befindet. Diese Daten sind wahlweise im Speicherbereich der Steuerung vorhanden oder aus dem Steuerungsbereich ausgelagert.

Es wird für die Bestandteile weiterhin beschrieben, ob die Erzeugung mit oder ohne Beteiligung des Steuerprogramms erzeugt werden kann.

Es wird eine Kopplung aufgebaut zwischen dem Browser (Request-Daten und Response-Daten), Werten in der SPS und Code in der SPS. Werte aus dem Browser-Request werden in den Speicher der SPS kopiert, dann wird optional Code in der SPS ausgeführt. Danach werden Werte und Bestandteile-Inhalt aus dem Speicher der SPS gelesen und als Antwort (Response) an den Browser geschickt. Das Steuerungsprogramm muss sich so um den Prozeß nicht weiter kümmern sondern muss nur Werte verarbeiten und neue Werte bestimmen. Dies geschieht entweder vollkommen unabhängig von dem Seitenaufruf oder aber (für interaktive und dynamische Webanwendungen vorteilhaft) gekoppelt mit dem Seitenaufruf.

Vorteilhafte Ausgestaltungen und Weiterbildungen sind in den Unteransprüchen angegeben.

Für die einzelnen Bestandteile ist weiterhin beschrieben, welche Werte (dynamische Daten in der Steuerung) mit dem Bestandteil verknüpft sind. Damit wird festgelegt, welche Werte (Cookies, Formularwerte, Header) der Server aus der Anforderung entnimmt und zur weiteren Verarbeitung in den Speicher kopiert.

Für die einzelnen Bestandteile ist beschrieben, wie der Web-server zur Erstellung der angeforderten zusammengesetzten Webseite Werte und/oder Einzelbestandteile aus dem Speicher entnimmt.

Es wird damit auch festgelegt, welche Werte oder Einzelbestandteile (Cookies, Header, Seiteninhalt) das Steuerungsprogramm nach Ausführung in den Speicher zurückfließen lässt.

Vorteilhaft ist es, wenn der Server eine Typenkonvertierung des zumindest einen Wertes durchführt vor dem Schreiben des zumindest einen Wertes in den Speicher oder nach dem Lesen eines Wertes aus dem Speicher. Typen des Steuerprogramms sind üblicherweise skalar (integer, float, bool, ...), wohingegen die Typen im Browser üblicherweise Zeichenketten (strings) sind. Dadurch wird das Steuerungsprogramm von der expliziten Typenkonvertierung befreit, Stringverarbeitung im Steuerungsprogramm ist üblicherweise schwierig und zeitintensiv.

Einen weiteren Vorteil bei der Konvertierung der Werte stellen die sogenannten ENUMs (= Aufzählungstypen in der Programmierung) dar. Hier werden skalare Werte aus dem SPS-Speicher in entsprechende Zeichenketten hin- und rückkonvertiert. (1: Motor an; 2: Motor aus; 3: ...). Diese Umwandlung erfolgt bei entsprechender Konfiguration auch Fremdsprachenabhängig, d. h. die Zeichenketten sind an die gewählte Sprache angepasst (Motor ein / Engine on / ...)

In der Automatisierungstechnik ist eine fundamentale Aufgabe die Visualisierung von laufenden Prozessen und Abläufen. Diese Domäne wird heute durch die Gesamtheit der HMI Geräte (Panels, Scada Systeme etc.) abgedeckt. Steuerungsgeräte die den eigentlichen Prozeßablauf steuern, können heute solche Aufgaben nicht oder nur ungenügend übernehmen. Durch den Einzug der Web-Mechanismen in die Steuerungswelt öffnen sich hier neue Wege, die auch bereits in den letzten Jahren zu beobachten sind.

Vorteilhaft ist es daher, wenn zumindest ein dynamischer Inhalt der angeforderten Webseite eine Grafik umfasst die eine Zustandsbeschreibung eines durch das speicherprogrammierbare Steuerungssystem gesteuerten Gerätes darstellt. Die Eingreifstellen werden verwendet, um mit dem Steuerungsprogramm auf die Generierung der Grafik Einfluss zu nehmen: z. B. Füllstandsanzeige eines Tanks, Zustand des Steuerungsprogramms als Ampel o. ä.

Genauer kann die Generierung der Zustands-Grafik gesteuert werden durch den tatsächlichen physikalischen Zustand des zugehörigen Gerätes zum Anforderungszeitpunkt.

### Kurzbeschreibung der Zeichungen

Im folgenden wird die Erfindung anhand eines Ausführungsbeispieles erläutert. Dabei zeigt
Figur 1 den Ablauf einer Abfrage einer Webseite
Figur 2 die Verteilung der einzelnen Bestandteile
Figur 3 den Aufbau einer automatischen Seite
Figur 4 den Aufbau einer manuellen Seite
Figur 5 ein Anwendungsbeispiel,
Figur 6 den Stand der Technik wie er aus der EP 1865421 bekannt ist.

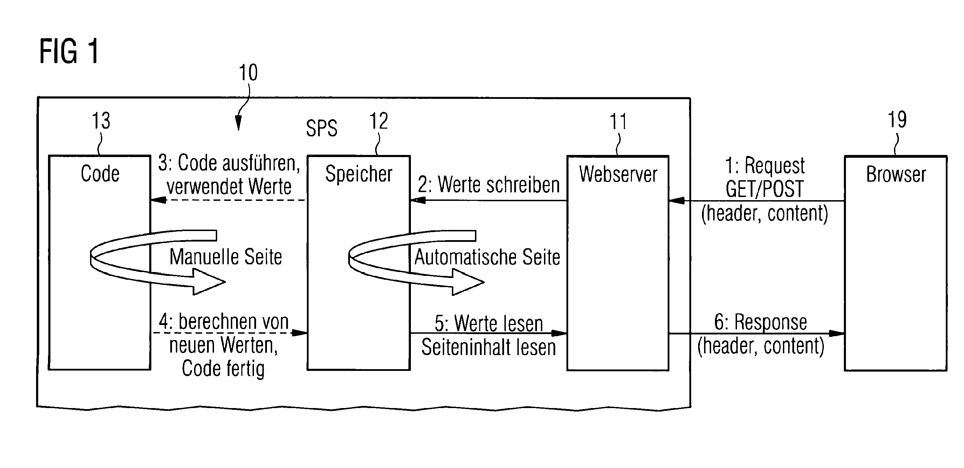

Figur 1 zeigt eine schematische Darstellung der Aufgabenverteilung bei der Webseiten-Erstellung. Vom Browser 19 kommt die Anforderung nach eine speziellen Webseite, Request, GET/POST (header, content) an den Webserver 11. Dieser schreibt ggf. Werte in den Speicher der SPS 12 und erhält im einfachsten Fall bereits eine (automatische, auch statische) Webseite zurück, welche er dann direkt an den Browser zurück liefern kann. Im anderen Fall sind weitere Informationen zur Erstellung einer (dynamischen) Webseite erforderlich. Daher wird ein Code 13 in der SPS ausgeführt, welcher ggf. die im SPS Speicher abgelegten Werte zur Ausführung verwendet. Die durch den Code berechneten neuen Werte werden dann in den Speicher der SPS abgelegt, aus dem der Webserver sie sich abholen kann um die gewünschte Seite fertig zu erstellen und an den Browser zurück zu liefern.

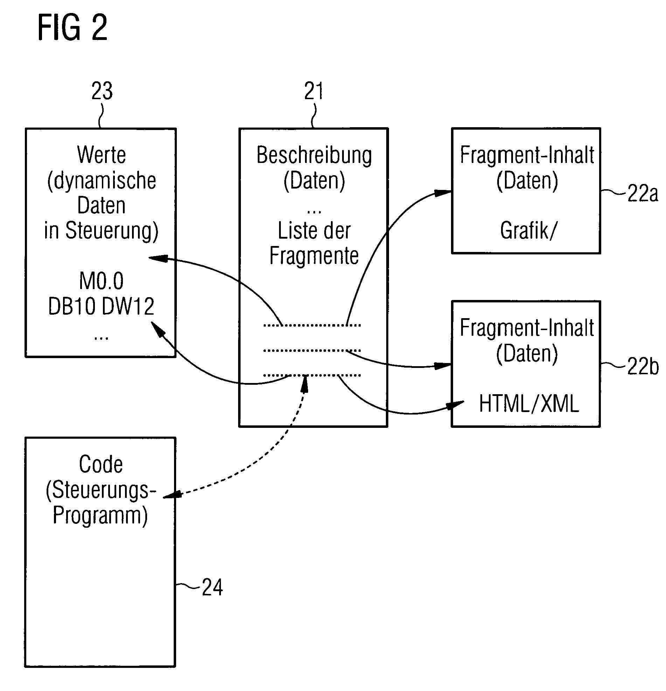

Figur 2 zeigt, aus welchen Einzelbestandteilen eine Webseite zusammengesetzt wird. Die oben bereits ausgeführte Beschreibung 21 enthält die Definition der Bestandteile, welche zur fertigen Webseite zusammen gesetzt werden können. Zum einen gibt es Bestandteile 22a, 22b, welche (statische) Grafiken oder HTML/XML Code enthalten. auf der linken Seite finden sich die dynamischen Bestandteile 23 welche modifiziert werden durch den Code 24, der sich im Steuerprogramm befindet und dann zur Ausführung freigegeben wird.

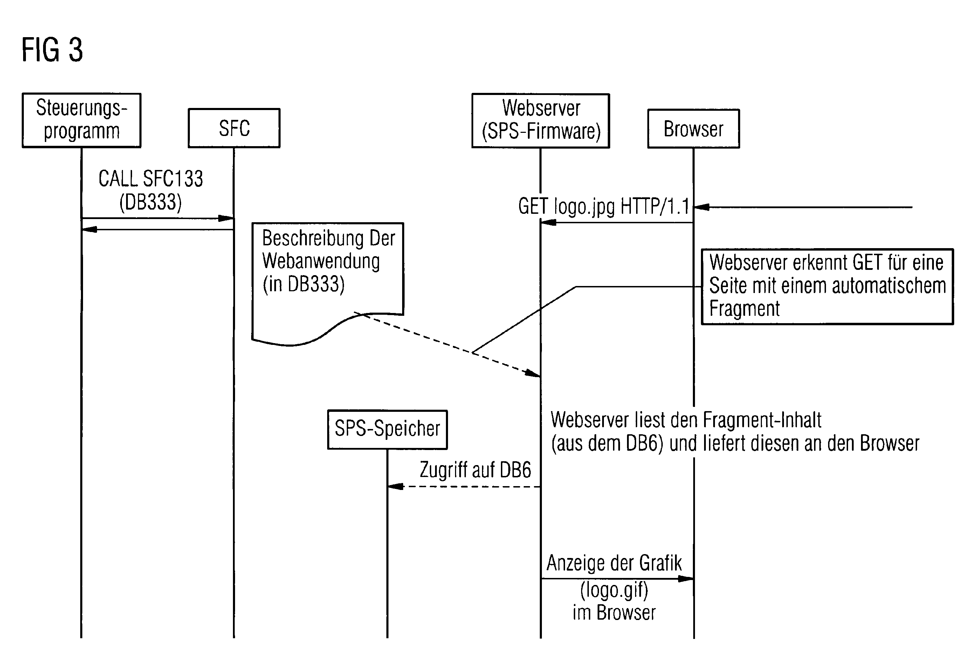

Figur 3 beschreibt die erste Vorgehensweise der Bearbeitung einer Seitenanforderung. Der Browser stellt eine Anforderung für eine bestimmte Seite (allgemein eine Ressource, welche durch eine URL beschrieben ist) dar, hier ,,get logo.gif". Ressourcen haben einen Typ, in diesem Fall handelt es sich um eine Grafik im ,,gif" Format. Der Web-Server in der SPS-Firmware stellt über die Beschreibung der Webanwendung fest, dass es sich hier um eine Seite bestehend aus einem statischen Bestandteil handelt. Er holt sich den Inhalt aus dem SPS-Speicher und liefert die Seite an den Browser zurück.

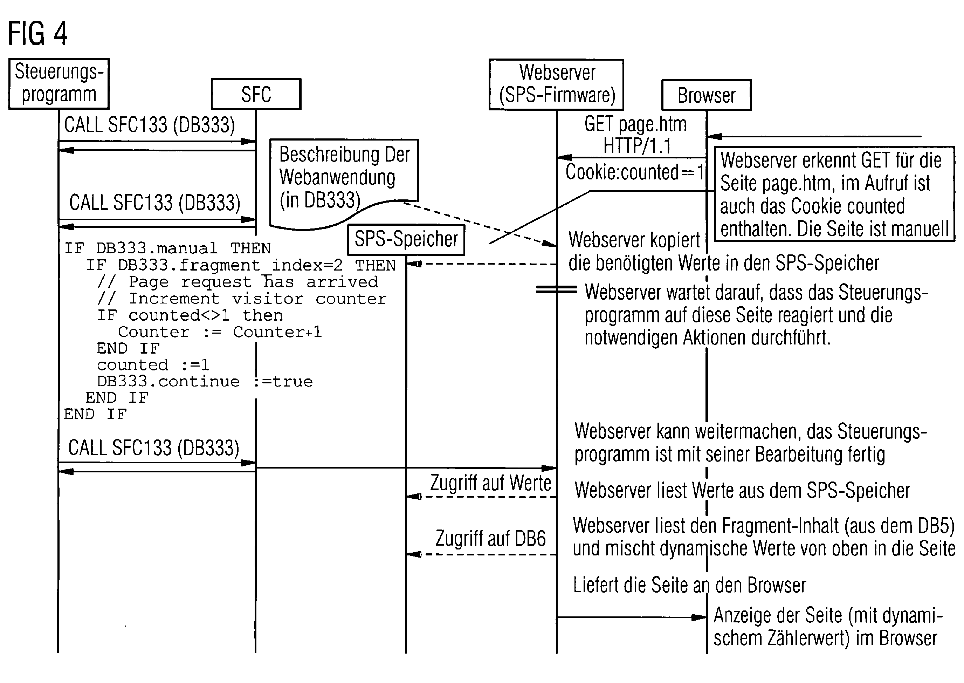

Figur 4 beschreibt die zweite Vorgehensweise der Bearbeitung einer Seitenanforderung. Der Browser stellt eine Anforderung ,,get page.htm". Es wird ein Wert dazu überreicht: Cookie ,,counted = 1). Der Webserver in der SPS Firmware stellt über die Beschreibung der Webanwendung fest, dass es sich hier um eine Seite bestehend aus mehreren Bestandteilen handelt, die weiterhin auch Werte verknüpft. In diesem Beispiel wird der Wert aus dem HTTP-Cookie-Header ,,counted" in die Steuerungsvariable ,,counted" im Speicher kopiert und dabei automatisch vom Datentyp ,,String" nach ,,Integer" konvertiert. Daraufhin wird das Steuerungsprogramm zur Ausführung freigegeben, welches auf den Werten (counted) arbeitet und andere Werte bestimmt (hier: Counter wird um eins hochgezählt). Wenn das Steuerungsprogramm fertig ist, setzt dieses den Webserver fort, der die verknüpften Werte aus dem SPS-Speicher ausliest (Counter) , dabei automatisch von ,,integer" zurück nach ,,String" konvertiert und der weiterhin den Inhalt des Bestandteils ausliest (die HTML-Rohseite) und die Werte in die Seite hineinkopiert. Die dabei fertig gestellte Seite wird an den Browser zurück geliefert.

Figur 5 zeigt ein Beispiel zur Erzeugung dynamischer Grafiken. Ein Client sendet einen Request auf ein Grafik-Objekt (z. B: http://MyServer/Part6/Robo1.png). Das soll einen Roboter darstellen, welcher einen Roboterarm umfasst. Die Position des Roboterarms soll dem aktuellen physikalischen Zustand entsprechen. Durch die oben geschriebenen Mechanismen wird nun das Steuerprogramm in die Lage versetzt, zum einen die Generierscripte von SSGO anzupassen oder nur Parameter (z.B. Winkel des Roboterarms) anzupassen. Nach der Freigabe des Requests durch das Steuerungsprogramm wird die Grafik mit Hilfe der Skripte und Parameter erzeugt. Die erzeugte Grafik wird an den Client zurück gesendet.

Üblicherweise wird der Beschreibungsteil außerhalb des Steuerungsprogramms erstellt und in die Steuerung (als Teil der Daten des Steuerungsprogramms) geladen. Weiterhin kann der Beschreibungsanteil auch durch weiteren Code des Steuerungsprogramms erstellt bzw. verändert werden.

Zusammenfassend sind im Folgenden die Eigenschaften des erfindungsgemäßen Gegenstandes aufgeführt.

Eine Webanwendung wird durch Daten im SPS-Speicher beschrieben und durch einen Web-Server (bevorzugt in der Firmware implementiert) auf Anfragen von einem Browser interpretiert und ausgeführt.

Seiten-Bestandteile der Webanwendung sind mit Werten verknüpft, diese werden bei der Seitenbearbeitung automatisch durch den Web-Server zwischen Browser und SPS-Speicher typgewandelt und kopiert. Im SPS-Speicher können Werte überall definiert werden. Auf der Webseite können Werte in HTML (in der Seite) im HTTP (im Headerbereich des Browser Request-Response Dialogs) oder aber in der Systemvariablen des Webservers abgebildet werden.

Webseiten-Bestandteile können optional so beschrieben sein, dass die Ausführung von SPS-Code eingeschoben werden muss, bevor der Webserver die Bearbeitung der Seiten(Bestandteile) fortsetzen kann.

Der SPS-Code kann mit Hilfe der Werte die Antwort des Webservers sehr genau steuern (Status-Codes, Weiterleitungen, Seitenaufbau, Seiteninhalt, usw.).

## Patentansprüche

1. Speicherprogrammierbares Steuerungssystem (10) zur automatisierten Erstellung von aus mindestens einem Einzelbestandteil und mindestens einem dynamischen Inhalt zusammengesetzten Webseiten, welche über einen Webbrowser anforderbar und darstellbar sind, mit
a. einem Server (11) zur Auswertung von eingehenden Anforderungen,
b. einem Speicher (12) zur Speicherung von Einzelbestandteilen (Fragment) und weiteren Werten,
c. einem Steuerungsprogramm (13) zur Erzeugung von weiteren dynamischen Inhalten.

2. Speicherprogrammierbares Steuerungssystem (10) nach Anspruch 1 oder 2, **dadurch gekennzeichnet, dass** der Server (11) zumindest einen Wert aus der Anforderung entnimmt und zur weiteren Verarbeitung in den Speicher (12) kopiert.

3. Speicherprogrammierbares Steuerungssystem nach einem der vorherigen Ansprüche, **dadurch gekennzeichnet, dass** der Server eine Typenkonvertierung des zumindest einen Wertes, insbesondere eines ENUM-Wertes, durchführt vor dem Schreiben des zumindest Wertes in den Speicher oder nach dem Lesen eines Wertes aus dem Speicher.

4. Speicherprogrammierbares Steuerungssystem nach einem der vorherigen Ansprüche, **dadurch gekennzeichnet, dass** der Server (11) nach Auswertung der Anforderung das Steuerungsprogramm (13) zur Ausführung und Generierung eines dynamischen Inhaltes freigibt.

5. Speicherprogrammierbares Steuerungssystem nach einem der vorherigen Ansprüche, **dadurch gekennzeichnet, dass** das Steuerungsprogramm (13) nach Ausführung die ermittelten Werte oder Einzelbestandteile im Speicher (12) ablegt.

6. Speicherprogrammierbares Steuerungssystem nach einem der vorherigen Ansprüche, **dadurch gekennzeichnet, dass** zumindest ein dynamischer Inhalt der angeforderten Webseite eine Grafik umfasst die eine Zustandsbeschreibung eines durch das speicherprogrammierbare Steuerungssystem gesteuerten Gerätes darstellt.

7. Speicherprogrammierbares Steuerungssystem nach Anspruch 6, **dadurch gekennzeichnet, dass** die Generierung der Zustands-Grafik gesteuert wird durch den tatsächlichen physikalischen Zustand des zugehörigen Gerätes zum Anforderungszeitpunkt.

8. Speicherprogrammierbares Steuerungssystem nach einem der vorherigen Ansprüche, **dadurch gekennzeichnet, dass** der Webserver zur Erstellung der angeforderten zusammengesetzten Webseite Werte und/oder Einzelbestandteile aus dem Speicher (12) entnimmt.

9. Speicherprogrammierbares Steuerungssystem nach einem der vorherigen Ansprüche, **dadurch gekennzeichnet, dass** es sich beim Speicher um einen SPS-Speicher handelt.

10. Verfahren zum automatisierten Erstellen von aus mindestens einem Einzelbestandteil und mindestens einem dynamischen Inhalt zusammengesetzten Webseiten, welche über einen Webbrowser anforderbar und darstellbar sind, mit folgenden Schritten
a. Empfang und Auswertung einer eingehenden Anforderungen (Request) durch den Webserver (11),
b. Hinterlegen (Werte schreiben) von Informationen im Speicher (12)
c. Freigeben des Steuerungsprogramms (13) zur Erzeugung des mindestens einen dynamischen Inhalts
d. Abrufen (Werte lesen) von dem mindestens einen Einzelbestandteil aus dem Speicher (12)
e. Fertigstellen und Ausliefern der Webseite (Response).

11. Verfahren nach Anspruch 10, **dadurch gekennzeichnet, dass** im Schritt a. zumindest ein Wert aus der Anforderung entnommen und zur weiteren Verarbeitung in den Speicher (12) kopiert wird (Werte schreiben).

12. Verfahren nach Patentanspruch 10 oder 11, **dadurch gekennzeichnet, dass** eine Typenkonvertierung des zumindest einen Wertes durchführt wird, insbesondere vom Typ String in einen skalaren Typ oder umgekehrt, vor dem Schreiben des zumindest Wertes in den Speicher und/oder nach dem Lesen eines Wertes aus dem Speicher.

13. Verfahren nach einem der vorherigen Patentansprüche, **dadurch gekennzeichnet, dass** im Schritt c vom Steuerungsprogramm (13) nach Ausführung die ermittelten Werte oder Einzelbestandteile im Speicher (12) ablegt werden.

14. Verfahren nach einem der vorherigen Patentansprüche, **dadurch gekennzeichnet, dass** zumindest ein dynamischer Inhalt der angeforderten Webseite eine Grafik umfasst die eine Zustandsbeschreibung eines durch das speicherprogrammierbare Steuerungssystem gesteuerten Gerätes darstellt.

15. Verfahren nach Anspruch 14, **dadurch gekennzeichnet, dass** die Generierung der Zustands-Grafik gesteuert wird durch den tatsächlichen physikalischen Zustand des zugehörigen Gerätes zum Anforderungszeitpunkt

16. Verfahren nach einem der vorherigen Patentansprüche, **dadurch gekennzeichnet, dass** der Webserver zur Erstellung der angeforderten zusammengesetzten Webseite Werte und/oder Einzelbestandteile aus dem Speicher (12) entnimmt
